# EUROPÄISCHE PATENTSCHRIFT

(11) **EP 1 500 362 B1**
(45) Veröffentlichungstag und Bekanntmachung des Hinweises auf die Patenterteilung: **15.06.2005**
(21) Anmeldenummer: 03291808.8
(22) Anmeldetag: 22.07.2003
(51) Int. Cl.: A47J 37/12

(54) **Anzeigeeinheit für ein Gargerät und Verfahren zum Anzeigen einer Temperatur und einer Leistungsinformation**
Display unit for a cooking device and method to display a temperature and power indication
Unité d'affichage pour un appareil de cuisson et méthode d'affichage d'un température et d'une indication de puissance

(43) Veröffentlichungstag der Anmeldung: 26.01.2005
(73) Patentinhaber: FRIMA SA, 68271 Wittenheim Cedex (FR); Rational AG, 86899 Landsberg/Lech (DE)
(72) Erfinder: Wagner, Stefan, 68127 Oberhergheim (FR); Wiedemann, Peter, 86836 Klosterlechfeld (DE)
(74) Vertreter: Weber-Bruls, Dorothée, Dr.

(56) Entgegenhaltungen:
- DE-U- 20 020 878
- GB-A- 2 276 243
- US-A- 5 827 556
- US-A1- 2003 094 448
- PATENT ABSTRACTS OF JAPAN vol. 017, no. 180 (C-1046), 8. April 1993 (1993-04-08) & JP 04 336010 A (MITSUBISHI ELECTRIC HOME APPLIANCE CO LTD;OTHERS: 01), 24. November 1992 (1992-11-24)

## Beschreibung

Die Erfindung betrifft eine Anzeigeeinheit für ein Gargerät mit einem mit Hilfe einer Heizung beheizbaren Tiegel zum Garen eines Lebensmittels und ein Verfahren zum Anzeigen einer Temperatur und einer Leistungsinformation mit Hilfe der Anzeigeeinheit. Die Anzeigeeinheit umfaßt einen Temperaturmeßeingang zum Empfangen eines Temperaturmeßsignals, das die Temperatur einer Flüssigkeit in dem Tiegel repräsentiert, eine Temperaturanzeige, die die von dem Temperaturmeßsignal repräsentierte Temperatur anzeigt, Mittel zum Empfangen einer Leistungsinformation, die die an den Tiegel abgegebene Leistung und/oder einen Regelzustand der Heizung repräsentiert und eine Leistungsanzeige zum Anzeigen der Leistungsinformation.

Aus der DE 694 26 578 C2 ist eine Fernsteuerung für ein Haushaltsgerät bekannt, wobei die Fernsteuerung eine Eingabe- und Anzeigeeinrichtung mit einem Bedienfeld umfasst. Das Bedienfeld wiederum umfasst eine Wähleinrichtung zur Auswahl der Betriebsparameter des Gargeräts einschließlich des Leistungsniveaus eines jeden Heizelements des Gargeräts. Ist beispielsweise ein erstes Heizelement eingeschaltet, so kann durch Drücken einer Leistungszu- oder- abnahme-Taste die Stromzufuhr zum ersten Heizelement erhöht bzw. verringert werden. Einem Benutzer des Gargeräts werden über das Niveau der an das erste Heizelement angelegten Leistung über eine Heizanzeige Informationen geliefert, indem mit Drücken der Leistungszunahme-Taste, beginnend mit einer Bezeichnung an "niedrig", im Uhrzeigersinn über das Feld "mittel" und bis zu dem Feld "hoch", keilförmige Teilfläche einer ersten Heizleistungsanzeige beleuchtet werden. Beispielsweise können neun Leistungsniveaus eingestellt und angezeigt werden, und zwar für jedes Heizelement analog zu der für das erste Heizelement beschriebenen Weise.

Gargeräte mit einem Tiegel, der mit einer Flüssigkeit gefüllt ist, die mit Hilfe einer Heizung erwärmt werden kann, sind insbesondere in der Großküche weit verbreitet. Sie werden verwendet, um Lebensmittel zuzubereiten, insbesondere zu garen. Für das Küchenpersonal ist es von Interesse, die Temperatur der Flüssigkeit in dem Tiegel zu kennen, insbesondere zu wissen, ob die Flüssigkeit siedet. Die am häufigsten verwendete Flüssigkeit ist Wasser, welches bei 100°C siedet.

Siedet die Flüssigkeit, so ist es ebenfalls von Interesse, zu wissen, wieviel Leistung über die Heizung des Tiegels an die Flüssigkeit abgegeben wird. Die abgegebene Leistung ist ein Maß für die dem in der Flüssigkeit befindlichen Kochgut pro Zeiteinheit zugeführte Energie oder Wärmemenge. Diese stellt einen wichtigen Parameter dar, der die Garzeit des Kochguts in der Flüssigkeit mitbestimmt.

Für einige Anwendungen ist es erforderlich, daß dem Kochgut nur eine geringe Energie bei der Siedetemperatur der Flüssigkeit zugeführt wird. In solch einem Anwendungsfall ist es wünschenswert, den Tiegel so zu betreiben, daß die Temperatur mit Hilfe einer Regelung der Heizung annähernd konstant gehalten wird. Bei anderen Anwendungen ist es erforderlich, daß den Lebensmitteln in der Flüssigkeit bei der Siedetemperatur eine große Energiemenge zugeführt wird. In solch einem Anwendungsfall ist es wünschenswert, daß die dem Tiegel zugeführte Energie, d. h. die Heizleistung der Heizung, festgelegt werden kann. Zum Optimieren des Kochergebnisses ist es wünschenswert, die beiden verschiedenen Betriebszustände unterscheiden zu können und gegebenenfalls die zugeführte Leistung feststellen zu können. Für das Küchenpersonal sind folglich sowohl der Regelzustand der Heizung als auch die von der Heizung abgegebene Leistung bei bestimmten Betriebszuständen des Gargerätes von Interesse. Diese beiden Informationen, der Regelzustand der Heizung des Tiegels und die tatsächliche an den Tiegel abgegebene Heizleistung der Heizung, werden im Zusammenhang mit dieser Erfindung als Leistungsinformationen bezeichnet.

Aufgabe der Erfindung ist es, eine verbesserte Anzeigeeinheit und ein Verfahren zu schaffen, die/das dem Bedienpersonal eines Gargerätes mit einem Tiegel zum Zubereiten von Lebensmitteln besser Informationen zur Verfügung stellt, um den Betriebszustand des Gargerätes beurteilen zu können, und/oder eine verbesserte Regelung ermöglicht.

Die Aufgabe wird durch eine Anzeigeeinheit nach Anspruch 1 und ein Verfahren nach Anspruch 13 erfindungsgemäß gelöst.

Der wesentliche Vorteil, welcher mit der Erfindung gegenüber dem Stand der Technik erreicht ist, besteht darin, daß die Anzeigeeinheit bzw. das Verfahren einem Nutzer des Gargerätes mit einem Tiegel die zum Betreiben desselben notwendigen Informationen vollständig zur Verfügung stellt. Dadurch, daß die Leistungsinformation nur angezeigt wird, wenn die Temperatur der Flüssigkeit den Siedepunkt erreicht oder überschritten hat, wird sichergestellt, daß der Betriebszustand des Gargerätes mit dem Tiegel schnell und eindeutig von dem Bedienpersonal erfaßt werden kann. Die Leistungsinformation wird also nur dann angezeigt, wenn ihr eine zusätzliche Information von dem Benutzer über den Betriebszustand des Gargerätes entnommen werden kann, d. h. wenn die Flüssigkeit in dem Tiegel siedet. In einem Betriebszustand unterhalb der Siedetemperatur, wird die Leistungsinformation nicht angezeigt, um dem Benutzer nicht durch unnötige Informationen zu verwirren. Insgesamt kann das Bedienpersonal den Garvorgang des Lebensmittels besser beurteilen und steuern.

Eine besonders übersichtliche und leicht ablesbare Ausführungsform der Erfindung wird dadurch geschaffen, daß die Leistungsanzeige mehrere Segmente umfaßt, die jeweils getrennt zwischen mindestens zwei Anzeigezuständen elektrisch schaltbar sind. Mehr-Segmentanzeigen sind in der Regel leichter ablesbar als beispielsweise Zeigerinstrumente. Die Möglichkeit, die Segmente getrennt elektrisch zwischen zwei Anzeigezuständen zu schalten, eröffnet wiederum die Möglichkeit, mit jedem Segment getrennt eine Information darzustellen.

Eine zweckmäßige Weiterbildung der Erfindung sieht vor, daß die mehreren Segmente in einen für einen Betrachter sichtbaren Ein-Zustand und einen sichtbaren Aus-Zustand elektrisch schaltbar sind. Diese Ausführungsform der Anzeigeeinheit zeichnet sich dadurch aus, daß ein Betrachter das Verhältnis der angezeigten, abgegebenen Leistung zu der maximal abzugebenden Leistung auf einen Blick leicht einschätzen kann.

Eine besonders einfache Darstellung sowohl des Regelzustands der Heizung als auch der abgegebenen Leistung wird bei einer Ausführungsform der Erfindung dadurch erreicht, daß die Leistungsanzeige gestaltet ist zum Darstellen des Regelzustands der Heizung mit Hilfe des Schaltens eines der mehreren Segmente in einen Ein-Zustand und alternativ zum Darstellen der von der Heizung abgegebenen Leistung mit Hilfe des Schaltens von zwei oder mehr der mehreren Segmente proportional zu der von der Heizung an den Tiegel abgegebenen Leistung in den Ein-Zustand.

Eine besonders vorteilhafte Weiterbildung der Erfindung wird dadurch realisiert, daß die Leistungsanzeige bei nicht vorliegendem Siedesignal in einen für den Betrachter im wesentlichen nicht sichtbaren Anzeigezustand elektrisch schaltbar ist. Diese Ausführungsform zeichnet sich dadurch aus, daß eine Fehlablesung der Leistungsanzeige in dem Temperaturbereich der Flüssigkeit unterhalb der Siedetemperatur ausgeschlossen wird und so eine Verwirrung des Bedienpersonals/Betrachters über den Betriebszustand nicht stattfinden kann.

Eine Ausführungsform der Erfindung mit einer besonders leicht abzulesenden Temperaturanzeige ist dadurch gekennzeichnet, daß die Temperaturanzeige eine Digitalanzeige ist.

Eine besonders kompakte Ausführungsform der Erfindung sieht vor, daß die Temperaturanzeige und die Leistungsanzeige in einem Anzeigeelement zusammengefaßt sind.

Eine besonders zuverlässige Ausführungsform der Erfindung wird dadurch geschaffen, daß das Anzeigeelement eine Flüssigkristallanzeige ist.

Um die Übersichtlichkeit der Anzeigeeinheit bei einer Ausführungsform der Erfindung zu erhöhen, ist zweckmäßiger Weise eine weitere Anzeige zum Anzeigen des Regelzustands der Heizung vorgesehen.

Eine Ausführungsform der Erfindung, die auch mit ansonsten ungeregelten Heizungseinheiten verwendet werden kann, sieht eine von der Steuereinheit umfaßte, mit den Mitteln zum Empfangen der Leistungsinformation gekoppelte Regeleinheit zum Regeln der von der Heizung abgegebenen Leistung mit Hilfe des Umschaltens zwischen einem eingeschalteten und einem ausgeschalteten Zustand der Heizung vor.

Eine zweckmäßige Weiterbildung der Erfindung, die eine selbständige Ermittlung der an den Tiegel abgegebenen Leistung ermöglicht, wird durch eine von der Steuereinheit umfaßte, mit den Mitteln zum Empfangen der Leistungsinformation gekoppelte Leistungsermittlungseinheit zum Ermitteln der an den Tiegel abgegebenen Leistung mit Hilfe einer Zeitintegrationseinheit anhand eines Verhältnisses einer Zeitdauer des eingeschalteten Zustands der Heizung zu einer weiteren Zeitdauer des ausgeschalteten Zustands der Heizung innerhalb einer vorgegebenen Zeitspanne erreicht.

Eine zweckmäßige Weiterbildung der Erfindung zum Ermöglichen einer leichten Bedienung umfaßt Eingabemittel zum Erfassen eines Vorgabewertes, wobei die Regeleinheit zum Bestimmen des Regelzustands der Heizung anhand des Vorgabewerts und der von dem Temperaturmeßsignal repräsentierten Temperatur gestaltet ist.

Die Merkmale der Weiterbildungen der abhängigen Ansprüche des Verfahrens zum Anzeigen der Temperatur und der Leistungsinformation weisen die in Verbindung mit zugehörigen Merkmalen in den abhängigen Vorrichtungsansprüchen genannten Vorteile auf.

Die Erfindung wird im folgenden anhand von Ausführungsbeispielen unter Bezugnahme auf eine Zeichnung näher erläutert. Hierbei zeigen:
- Figur 1: eine schematische Darstellung eines Gargerätes mit einem Tiegel und einer ersten Ausführungsform einer erfindungsgemäßen Anzeigeeinheit;
- Figur 2: eine schematische Darstellung eines Gargeräts mit einem Tiegel und einer zweiten Ausführungsform einer erfindungsgemäßen Anzeigeeinheit;
- Figur 3: eine weitere schematische Darstellung eines Gargerätes mit einem Tiegel und einer dritten Ausführungsform einer erfindungsgemäßen Anzeigeeinheit;
- Figuren 4a-4c: Ansichten einer weiteren erfindungsgemäßen Anzeigeeinheit bei verschiedenen Betriebszuständen eines Gargerätes; und
- Figur 5a-5c: charakterisierende Darstellungen verschiedener Betriebszustände eines Gargerätes, die jeweils mit Hilfe eines Temperatur-Zeit-Diagramms und eines Heizungsbetriebszustand-Zeit-Diagramms repräsentiert werden und mit den Anzeigedarstellungen der Figuren 4a, 4c und 4d entsprechend korrespondieren.

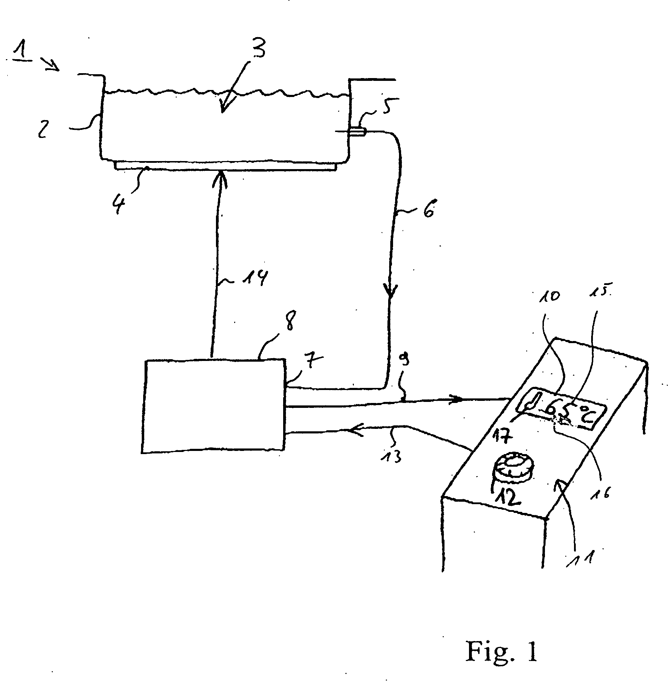

Figur 1 zeigt eine schematische Darstellung eines Gargerätes 1 mit einem Tiegel 2, in dem sich eine Flüssigkeit 3 befindet. Die Flüssigkeit 3 kann mit Hilfe einer Heizung 4, die an dem Tiegel 2 angeordnet ist, erwärmt werden. In der Flüssigkeit 3 werden Lebensmittel zubereitet, insbesondere gegart. Um die Temperatur der Flüssigkeit 3 in dem Tiegel 2 zu bestimmen, ist an dem Tiegel 2 ein Temperatursensor 5 angeordnet. Der Temperatursensor 5 erzeugt ein Temperaturmeßsignal, das über eine Temperaturmeßsignalleitung 6 an einen Temperaturmeßsignaleingang 7 einer Steuereinheit 8 weitergeleitet wird. Die Steuereinheit 8 steuert über eine Steuerleitung 9 ein Anzeigeelement 10, das in eine Bedienplatine 11 eingefügt ist und von einer erfindungsgemäßen Anzeigeeinheit umfaßt ist. Auf der Bedienplatine 11 ist ein Einstellrad 12, angeordnet, mit dem ein Vorgabewert für die Temperatur der Flüssigkeit 3 in dem Tiegel 2 und/oder die von der Heizung 4 an den Tiegel 2 abzugebende Leistung vorgegeben werden kann. Der Vorgabewert wird in ein elektronisches Signal umgewandelt, das über eine Vorgabewert-Leitung 13 an die Steuereinheit 8 weitergeleitet wird. Die Steuereinheit 8 kann über eine Regelungsleitung 14 die Leistung der Heizung 4 regeln. Diese Regelung der Heizung 4 geschieht vorzugsweise mit Hilfe eines Umschaltens zwischen einem eingeschalteten Zustand der Heizung 4 und einem ausgeschalteten Zustand der Heizung 4.

Die Steuereinheit 8 umfaßt eine Leistungsermittlungseinheit (nicht dargestellt), die die Heizleistung der Heizung 4 bestimmt. Ferner umfaßt die Steuereinheit 8 eine Regeleinheit (nicht dargestellt), die die Heizleistung der Heizung 4 regelt und angibt, ob die Heizung 4 sich in einem geregelten Zustand befindet, d. h. eine durch den Vorgabewert bestimmte Temperatur mit Hilfe der Regeleinheit konstant gehalten wird, oder ob der Regelzustand der Heizung ungeregelt ist, d. h. dem Tiegel 2 durch die Heizung 4 beispielsweise eine größere Heizleistung zugeführt wird, als zum Halten der vorgegebenen Temperatur notwendig ist.

Eine alternative Ausführungsform der Steuereinheit könnte einen Leistungssignaleingang zum Empfangen einer Leistungsinformation umfassen, wobei die Leistungsinformation sowohl die an den Tiegel 2 abgegebene Leistung als auch den Regelzustand der Regeleinheit bzw. der Heizung 4 repräsentiert.

Das Anzeigeelement 10 umfaßt eine Temperaturanzeige 15 und eine Leistungsanzeige 16, wobei letzten in dem dargestellten Betriebszustand für einen Betrachter nicht sichtbar ist. Ferner umfaßt das Anzeigeelement 10 eine weitere Anzeige 17, die den Regelzustand der Heizung 4 getrennt anzeigt. Das Anzeigeelement kann eine Flüssigkristallanzeige, eine Anzeige auf Basis von Leuchtdioden (LED) oder eine Anzeige auf Basis einer beliebigen anderen Anzeigetechnik sein, die dem Fachmann bekannt sind.

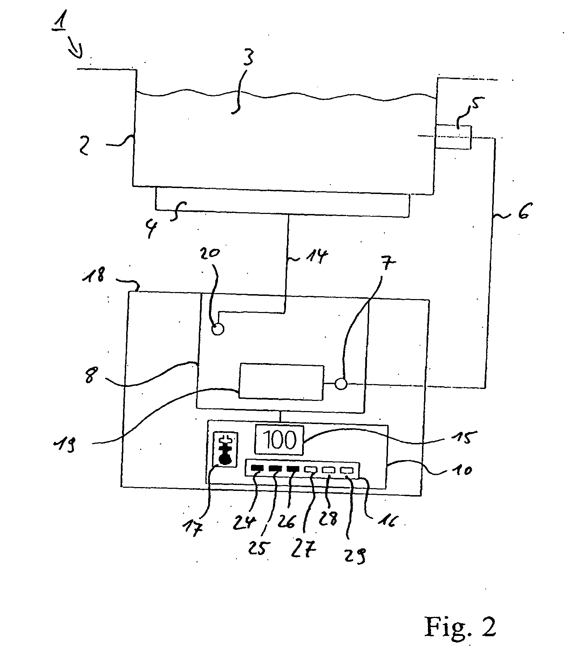

Figur 2 zeigt eine schematische Darstellung einer anderen Ausführungsform eines Gargerätes 1 mit einer erfindungsgemäßen Anzeigeeinheit 18. In den Figuren dieser Beschreibung sind ähnliche technische Bauelemente mit identischen Bezugszeichen bezeichnet. Bei der Ausführungsform der Figur 2 umfaßt eine Steuereinheit 8, wie auch bereits mit Bezug auf Figur 1 dargestellt, einen Temperaturmeßsignaleingang 7, über den ein mit Hilfe einer Temperaturmeßsignalleitung 6 übermitteltes Temperaturmeßsignal von einem Temperatursensor 5 empfangen wird. Das Temperaturmeßsignal wird von dem Temperaturmeßsignaleingang 7 an Vergleichsmittel 19 weitergeleitet, die die von dem Temperaturmeßsignal repräsentierte Temperatur mit einer Siedetemperatur der Flüssigkeit 3 vergleichen. Übersteigt die Temperatur der Flüssigkeit 3 die Siedetemperatur, so wird ein Siedesignal erzeugt. Die Steuereinheit 8 ist so ausgestaltet, daß die über einen Leistungssignaleingang 20 empfangene Leistungsinformation mit Hilfe der Leistungsanzeige 16 nur dargestellt wird, wenn das Siedesignal vorliegt. Ferner ändert eine weitere Anzeige 17 ihr Erscheinungsbild in Abhängigkeit von einem Regelzustand einer Heizung 4. Ein Benutzer kann dann an der Temperaturanzeige 15 des Anzeigeelements 10 ablesen, daß die Temperatur der Flüssigkeit 3 in dem Tiegel 2 100°C beträgt. Die weitere Anzeige 17 zeigt an, daß sich die Heizung 4 nicht in einem geregelten Zustand befindet. Darüber hinaus kann ein Benutzer des Gargerätes 1 an der Leistungsanzeige 16 ablesen, daß die Heizung 4 sich nicht in einem geregelten Regelzustand befindet, sondern in Figur 2 etwa die Hälfte der maximal möglichen Leistung, die an den Tiegel 2 von der Heizung 4 abgegeben werden kann, abgegeben wird.

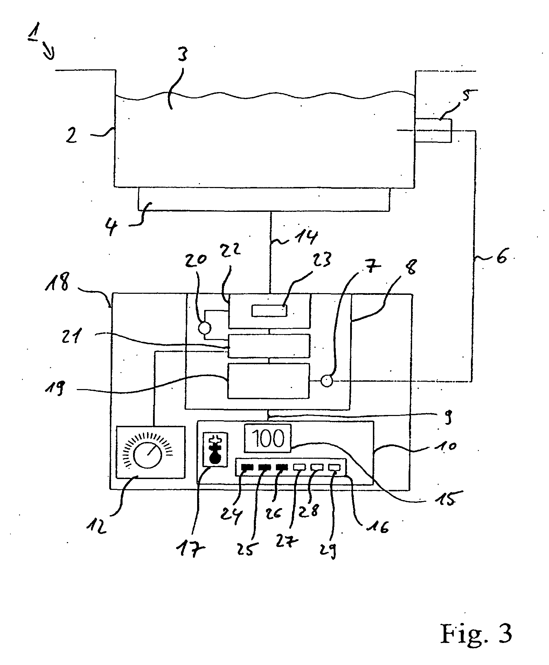

Figur 3 zeigt eine weitere Ausführungsform eines Gargerätes 1 mit einer erfindungsgemäßen Anzeigeeinheit 18. Die Ausführungsform nach Figur 3 unterscheidet sich von der Ausführungsform nach Figur 2 dadurch, daß die Steuereinheit 8 zusätzlich eine Regeleinheit 21 umfaßt, die durch ein Umschalten zwischen einem eingeschalteten Zustand der Heizung 4 und einem ausgeschalteten Zustand der Heizung 4 die an den Tiegel 2 abgegebene Leistung regelt. Hierzu verwendet die Regeleinheit 21 ein elektronisches Signal eines Vorgabewerts, der über ein Einstellrad 12 eingegeben worden ist, sowie das Temperaturmeßsignal des Temperatursensors 5, das über die Temperaturmeßsignalleitung 6 zu dem Temperaturmeßsignaleingang 7 weitergeleitet worden ist.

Bei einem Gargerät 1, das mit Wasser als Flüssigkeit 3 betrieben wird, kann an dem Einstellrad 12 entweder eine Temperatur zwischen 0°C und 99°C eingestellt oder eine Siedebetriebsbedingung des Gargeräts vorgewählt werden. Für die Temperatur 100°C, die Siedetemperatur der Flüssigkeit 3, stehen somit mehrere Einstellpositionen zur Verfügung, die die von der Heizung 4 abgegebene Leistung vorbestimmen. Anhand des mit Hilfe des Einstellrads 12 eingegebenen Vorgabewertes und der von dem Temperaturmeßsignal repräsentierten Temperatur der Flüssigkeit 3 in dem Tiegel 2 kann die Regeleinheit 21 den Regelzustand der Heizung 4 bestimmen oder festlegen.

Die Steuereinheit 8 umfaßt ferner eine Leistungsermittlungseinheit 22, die mit Hilfe einer Zeitintegrationseinheit 23 die von der Heizung 4 an den Tiegel 2 abgegebene Leistung anhand einer Zeitdauer des eingeschalteten Zustands der Heizung 4 zu einer weiteren Zeitdauer des ausgeschalteten Zustands der Heizung 4 innerhalb einer vorgegebenen Zeitspanne ermittelt. Die Leistungsermittlungseinheit 22 und die Regeleinheit 21 sind mit Mitteln zum Empfangen einer Leistungsinformation, beispielsweise einem Leistungssignaleingang der Steuereinheit 8, gekoppelt, die die Leistungsinformation nutzt, um das Anzeigeelement 10 zu steuern.

Die Steuereinheit 8 und ihre Bestandteile können sowohl in Hardware als auch in Software ausgeführt sein. Im zweiten Fall umfaßt die Steuereinheit eine elektrisch Rechnereinheit, die die Funktionen der verschiedenen beschriebenen Bestandteile der Steuereinheit übernimmt.

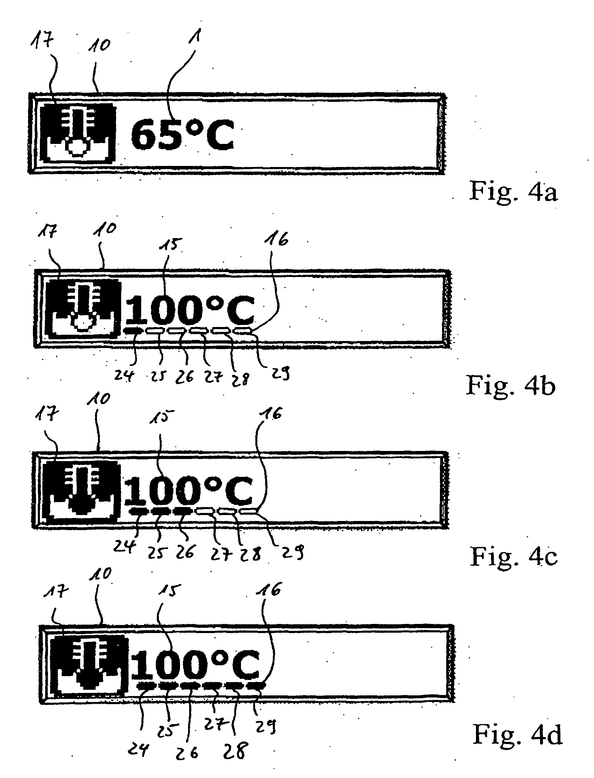

Die Figuren 4a-4d zeigen die Darstellung unterschiedlicher Ansichten eines Anzeigeelements 10 einer erfindungsgemäßen Anzeigeeinheit, die mit verschiedenen Betriebszuständen das Gargeräts 1 korrespondieren. Die Figur 4a zeigt den Zustand (Fall 1), in dem mit dem Einstellrad 12 eines Gargerätes 1 nach Figur 3 eine Temperatur von 65°C vorgewählt ist und die Regeleinheit 21 mit Hilfe der Heizung 4 die Flüssigkeit 3 auf eine Temperatur von 65°C erwärmt hat. Die Temperaturanzeige 15 des Anzeigeelements 10 zeigt die gemessene Temperatur von 65°C an. Die weitere Anzeige 17 zeigt an, daß die Heizung 4 sich in einem geregelten Zustand befindet. Die Leistungsanzeige 16 ist in diesem Betriebszustand des Gargeräts 1 in einen für einen Betrachter nicht sichtbar Anzeigezustand elektrisch geschaltet.

Die Figur 4b zeigt den Betriebszustand (Fall 2), bei dem die Temperatur mit Hilfe des Einstellrads 12 eines Gargerätes 1 nach Figur 3 auf 100°C vorgewählt ist und die Regeleinheit 21 die Flüssigkeit 3 in dem Tiegel 2 mit Hilfe der Heizung 4 auf diese Temperatur geregelt hat. Die weitere Anzeige 17 zeigt an, daß die Regeleinheit 21 sich in einem geregelten Zustand befindet. Dies wird ebenfalls mit Hilfe eines Segments 24 von mehreren Segmenten 24-29 angezeigt, das sich in einem sichtbaren Ein-Zustand befindet. Die übrigen Segmente 25-29 der mehreren Segmente 24-29 befinden sich in einem sichtbaren Aus-Zustand.

Die Figur 4c zeigt einen Betriebszustand (Fall 3) eines Gargerätes 1 nach Figur 3, bei dem mit Hilfe des Einstellrades 12 eine Temperatur von 100°C sowie ein Zustand vorgewählt ist, bei dem die Regeleinheit 21 sich nicht in einem geregelten Zustand befindet, sondern dem Tiegel eine vorbestimmte Leistung zuführt, die größer als die zum Aufrechterhalten der Siedetemperatur von 100°C erforderliche, abgegebene Leistung ist. Die Temperaturanzeige 15 zeigt erneut 100°C an, und die weitere Anzeige 17 deutet an, daß sich die Regeleinheit 21 bzw. die Heizung 4 in einem nicht geregelten Zustand befinden. Von der Leistungsanzeige sind drei Segmente 24, 25, 26 in dem Ein-Zustand, und verbleibende Segmente 27, 28, 29 der mehreren Segmente 24-29 befinden sich in einem Aus-Zustand.

Figur 4d zeigt schließlich den Betriebszustand (Fall 4) eines Gargerätes 1 nach Figur 3, bei dem mit Hilfe des Einstellrades 12 die maximale Temperatur und Leistung eingestellt sind. Die Temperaturanzeige 15 des Anzeigeelements 10 zeigt die Temperatur von 100°C an. Die zusätzliche Anzeige 17 zeigt an, daß die Regeleinheit sich in einem nicht geregelten Zustand befindet. Die mehreren Segmente 24-29 sind alle in den Ein-Zustand geschaltet, wodurch angedeutet wird, daß dem Tiegel 2 die maximal mögliche Leistung mit Hilfe der Heizung 4 zugeführt wird.

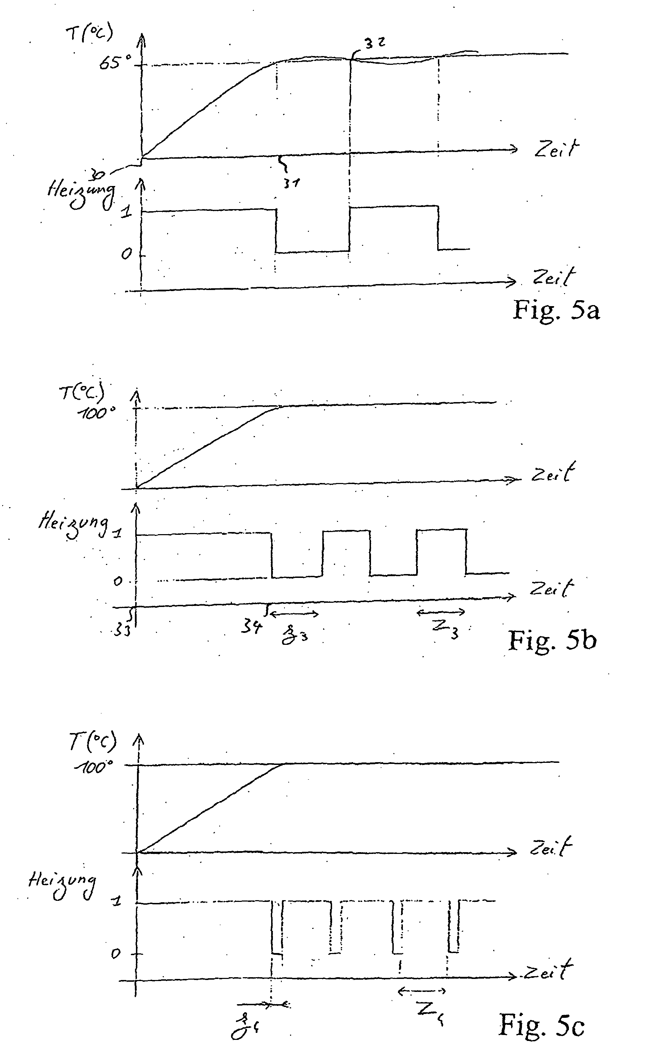

Figuren 5a-5c charakterisieren die verschiedenen, zu den in den Figuren 4a, 4c und 4d dargestellten Anzeigeelementen korrespondieren Betriebszustände des Gargerätes 1 jeweils mit Hilfe eines Temperatur-Zeit-Diagramms sowie eines Heizungsbetriebszustand-ZeitDiagramms.

In Figur 5a ist der Betriebszustand gemäß Figur 4a (Fall 1) des Gargerätes 1 nach Figur 3 dargestellt, bei dem mit Hilfe des Einstellrades 12 eine Temperatur von 65°C vorgewählt ist. Die Regeleinheit 21 schaltet die Heizung 4 zu einem Zeitpunkt 30, an dem die Einstellung erfolgt, in einen eingeschalteten Zustand (1). Die Temperatur der Flüssigkeit 3 in dem Tiegel 2 steigt an. Ist die vorgewählte Temperatur von 65°C erreicht, so schaltet die Regeleinheit 21 in einem Zeitpunkt 31 die Heizung 4 ab (0). Zu einem Zeitpunkt 32 fällt die Temperatur erneut unter 65°C, so daß die Regeleinheit 21 die Heizung 4 erneut in den eingeschalteten Zustand (1) schaltet. Auf diese Weise wird die Temperatur der Flüssigkeit 3 in dem Tiegel 2 konstant bei 65°C gehalten.

Figur 5b zeigt den mit dem in Figur 4c dargestellten Anzeigeelement 18 korrespondierenden Betriebszustand (Fall 3). Zunächst wird an dem Einstellrad 12 nach Figur 3 eine Temperatur von 100°C vorgewählt und zugleich festgelegt, daß etwa die halbe Heizleistung dem Tiegel 2 zugeführt wird, die maximal dem Tiegel 2 zugeführt werden kann. Zunächst schaltet die Regeleinheit 21 zu einem Zeitpunkt 33 die Heizung in einen eingeschalteten Zustand (1). Die Temperatur steigt an, bis sie 100°C zum Zeitpunkt 34 erreicht. Für eine Zeitspanne z₃ wird die Heizung 4 dann von der Regeleinheit 21 in einen ausgeschalteten Zustand (0) geschaltet. Anschließend wird die Heizung 4 erneut in einen eingeschalteten Zustand (1) umgeschaltet. Das Umschalten zwischen dem eingeschalteten und dem ausgeschalteten Zustand erfolgt anschließend fortwährend. Die Zeitspannen z₃, in denen die Heizung in einem ausgeschalteten Zustand (0) ist, und die Zeitspannen Z₃, in den die Heizung in einem eingeschalteten Zustand (1) ist, sind etwa gleich lang. Somit wird von der Heizung 4 an den Tiegel 2 ungefähr die Hälfte der maximal möglichen Leistung abgegeben.

Figur 5c zeigt schließlich den Zustand (Fall 4) des Gargerätes 1 nach Figur 3, bei dem die maximal mögliche Leistung von der Heizung 4 an den Tiegel 2 abgegeben wird, in Analogie zu Figur 4d. Dieser Betriebszustand unterscheidet sich von dem in Figur 5b dargestellten Betriebszustand lediglich dadurch, daß die Zeitspanne z₄, in der die Heizung 4 in einem ausgeschalteten Zustand (0) ist, kürzer ist als die Zeitspanne Z₄, in der die Heizung 4 in einem eingeschalteten Zustand (1) ist. Die Zeitspanne z₄, in der die Heizung in einem ausgeschalteten Zustand (0) ist, ist notwendig, um eine Überhitzung der Heizung 4 und damit eine Zerstörung zu vermeiden. Andere Ausführungsformen können so ausgestaltet sein, daß die Heizung 4 dauerhaft in dem eingeschalteten Zustand (1) bleiben kann.

In der vorstehenden Beschreibung, den Ansprüchen und der Zeichnung offenbarten Merkmale der Erfindung können sowohl einzeln als auch in jeder beliebigen Kombination für die Verwirklichung der Erfindung in ihren verschieden Ausführungsformen von Bedeutung sein.

### Bezugszeichenliste

- 1: Gargerät
- 2: Tiegel
- 3: Flüssigkeit
- 4: Heizung
- 5: Temperatursensor
- 6: Temperaturmeßsignalleitung
- 7: Temperaturmeßsignaleingang
- 8: Steuereinheit
- 9: Steuerleitung
- 10: Anzeigeelement
- 11: Bedienplatine
- 12: Einstellrad
- 13: Vorgabewert-Leitung
- 14: Regelungsleitung
- 15: Temperaturanzeige
- 16: Leistungsanzeige
- 17: Anzeige
- 18: Anzeigeeinheit
- 19: Vergleichsmittel
- 20: Leistungssignaleingang
- 21: Regeleinheit
- 22: Leistungsermittlungseinheit
- 23: Zeitintegrationseinheit
- 24-29: Segment
- 30-34: Zeitpunkt

## Patentansprüche

1. Anzeigeeinheit (18) für ein Gargerät (1) mit einem mit Hilfe einer Heizung (4) beheizbaren Tiegel (2) zum Garen eines Lebensmittels, mit:
- einem Temperaturmeßeingang (7) zum Empfangen eines Temperaturmeßsignals, das die Temperatur einer Flüssigkeit (3) in dem Tiegel (2) repräsentiert;
- einer Temperaturanzeige (15), die die von dem Temperaturmeßsignal repräsentierte Temperatur anzeigt;
- Mittel (20) zum Empfangen einer Leistungsinformation, die die an den Tiegel (2) abgegebene Leistung und/oder einen Regelzustand der Heizung (4) repräsentiert; und
- einer Leistungsanzeige (16) zum Anzeigen der Leistungsinformation;
**gekennzeichnet durch** Vergleichsmittel (19) zum Erzeugen eines Siedesignals, wenn die von dem Temperaturmeßsignal repräsentierte Temperatur größer oder gleich einer Siedetemperatur der Flüssigkeit (3) in dem Tiegel (2) ist, und eine Steuereinheit (8) zum Steuern der Leistungsanzeige (16), so daß die Leistungsanzeige (16) nur bei Vorliegen des Siedesignals die Leistungsinformation anzeigt, wobei die Steuereinheit (8) die Vergleichsmittel (19) umfaßt.

2. Anzeigeeinheit (18) nach Anspruch 1, **dadurch gekennzeichnet, daß** die Leistungsanzeige (16) mehrere Segmente (24-29) umfaßt, die jeweils getrennt zwischen mindestens zwei Anzeigezuständen elektrisch schaltbar sind.

3. Anzeigeeinheit (18) nach Anspruch 2, **dadurch gekennzeichnet, daß** die mehreren Segmente (24-29) in einen für einen Betrachter sichtbaren Ein-Zustand und einen sichtbaren Aus-Zustand elektrisch schaltbar sind.

4. Anzeigeeinheit (18) nach Anspruch 2 oder 3, **dadurch gekennzeichnet, daß** die Leistungsanzeige (16) gestaltet ist zum Darstellen eines geregelten Regelzustands der Heizung (4) mit Hilfe des Schaltens eines (24) der mehreren Segment (24-29) in einen Ein-Zustand und alternativ zum Darstellen der von der Heizung (4) abgegebenen Leistung mit Hilfe des Schaltens von zwei (24, 25) oder mehr der mehreren Segmente (24-29) proportional zu der von der Heizung (4) an den Tiegel (2) abgegebenen Leistung in den Ein-Zustand.

5. Anzeigeeinheit (18) nach einem der vorangegangenen Ansprüche , **dadurch gekennzeichnet, daß** die Leistungsanzeige (16), insbesondere die mehreren Segmente, bei nicht vorliegendem Siedesignal in einen für den Betrachter im wesentlichen nicht sichtbaren Anzeigezustand elektrisch schaltbar ist.

6. Anzeigeeinheit (18) nach einem der vorangegangenen Ansprüche, **dadurch gekennzeichnet, daß** die Temperaturanzeige (15) eine Digitalanzeige ist.

7. Anzeigeeinheit (18) nach einem der vorangegangenen Ansprüche, **dadurch gekennzeichnet, daß** die Temperaturanzeige (15) und die Leistungsanzeige (16) in einem Anzeigeelement (10) zusammengefaßt sind.

8. Anzeigeeinheit (18) nach Anspruch 7, **dadurch gekennzeichnet, daß** das Anzeigeelement (10) eine Flüssigkristallanzeige ist.

9. Anzeigeeinheit (18) nach einem der vorangegangenen Ansprüche, **gekennzeichnet durch** eine weitere Anzeige (17) zum Anzeigen des Regelzustands der Heizung (4).

10. Anzeigeeinheit (18) nach einem der vorangegangenen Ansprüche, **gekennzeichnet durch** eine von der Steuereinheit (8) umfaßte, mit den Mitteln (20) zum Empfangen der Lelstungsinformation gekoppelte Regeleinheit (21) zum Regeln der von der Heizung (4) abgegebenen Leistung mit Hilfe eines Umschaltens zwischen einem eingeschalteten und einem ausgeschalteten Zustand der Heizung (4).

11. Anzeigeeinheit (18) nach einem der vorangegangenen Ansprüche, **gekennzeichnet durch** eine von der Steuereinheit (8) umfaßte, mit den Mitteln (20) zum Empfangen der Leistungsinformation gekoppelte Leistungsermittlungseinheit (22) zum Ermitteln der an den Tiegel (2) abgegebenen Leistung mit Hilfe einer Zeitintegrationseinheit (23) anhand eines Verhältnisses einer Zeitdauer des eingeschalteten Zustands der Heizung (4) zu einer weiteren Zeitdauer des ausgeschalteten Zustands der Heizung (4) innerhalb einer vorgegebenen Zeitspanne.

12. Anzeigeeinheit (18) nach einem der Ansprüche 10 oder 11, **gekennzeichnet durch** Eingabemittel (12) zum Erfassen eines Vorgabewertes, wobei die Regeleinheit (21) zum Bestimmen des Regelzustands der Heizung (4) anhand des Vorgabewerts und der von dem Temperaturmeßsignal repräsentierten Temperatur gestaltet ist.

13. Verfahren zum Anzeigen einer Temperatur und einer Leistungsinformation für ein Gargerät (1) mit einem mit Hilfe einer Heizung (4) beheizbaren Tiegel (2) zum Garen eines Lebensmittels mit folgenden Schritten:
- Empfangen eines Temperaturmeßsignals, das die Temperatur einer Flüssigkeit (3) in dem Tiegel (2) repräsentiert;
- Anzeigen der von dem Temperaturmeßsignal repräsentierten Temperatur mit Hilfe einer Temperaturanzeige (15); und
- Empfangen einer Leistungsinformation, die die an den Tiegel (2) abgegebene Leistung und/oder einen Regelzustand der Heizung (4) repräsentiert;
**gekennzeichnet durch** folgende Schritte:
- Vergleichen der von dem Temperatursignal repräsentierten Temperatur mit einer Siedetemperatur der Flüssigkeit (3) mit Hilfe von Vergleichsmitteln (19) und Erzeugen eines Siedesignals, wenn die von dem Temperaturmeßsignal repräsentierte Temperatur größer oder gleich der Siedetemperatur der Flüssigkeit (3) in dem Tiegel (2) ist, und
- Steuern der Leistungsanzeige (16) mit Hilfe einer Steuereinheit (8), so daß die Leistungsanzeige (16) nur bei Vorliegen des Siedesignals die Leistungsinformation anzeigt.

14. Verfahren nach Anspruch 13, **dadurch gekennzeichnet, daß** das die Leistungsanzeige (16) in einen für einen Betrachter im wesentlichen nicht sichtbaren Zustand elektrisch geschaltet wird, wenn das Siedesignal nicht vorliegt.

15. Verfahren nach Anspruch 13 oder 14, **dadurch gekennzeichnet, daß** ein Segment (24) von mehreren Segmenten (24-29) der Leistungsanzeige (16) in einen Ein-Zustand und die übrigen der mehreren Segmente (24-29) in einen Aus-Zustand geschaltet werden, wenn das Siedesignals vorliegt und der die Leistungsinformation den geregelten Regelzustand der Heizung (4) repräsentiert.

16. Verfahren nach einem der Ansprüche 13 bis 15, **dadurch gekennzeichnet, daß** zwei (24, 25) oder mehr der mehreren Segmente (24-29) proportional zu der von der Heizung (4) an den Tiegel (2) abgegebenen Leistung in den Ein-Zustand geschaltet werden, wenn das Siedesignal vorliegt und die Leistungsinformation die an den Tiegel (2) abgegebene Leistung der Heizung (4) repräsentiert.

17. Verfahren nach einem der Ansprüche 13 bis 16, **dadurch gekennzeichnet, daß** die Heizung (4) mit Hilfe einer Regeleinheit (21) geregelt wird, indem die Heizung (4) zwischen einem eingeschalteten und einem ausgeschalteten Zustand umgeschaltet wird.

18. Verfahren nach einem der Ansprüche 13 bis 17, **gekennzeichnet durch** ein Ermitteln der von der Heizung (4) abgegebenen Leistung mit Hilfe einer Zeitintegration zum Bestimmen eines Verhältnisses einer Zeitdauer des eingeschalteten Zustands der Heizung (4) zu einer weiteren Zeitdauer des ausgeschalteten Zustands der Heizung (4) innerhalb einer vorgegebenen Zeitspanne.

19. Verfahren nach einem der Ansprüche 17 oder 18, **dadurch gekennzeichnet, daß** mit Hilfe von Eingabemitteln ein Vorgabewert in ein elektronisches Signal gewandelt wird, anhand dessen die Regeleinheit (21) in Abhängigkeit von der von dem Temperaturmeßsignal repräsentierten Temperatur den Regelzustand der Heizung (4) bestimmt.

## Claims

1. A display unit (18) for a cooking appliance (1) with a pan (2) heatable by means of a heater (4) for the purpose of cooking food, comprising:
- a temperature measuring input (7) for receiving a temperature measuring signal representing the temperature of a liquid (3) in the pan (2);
- a temperature display (15) which displays the temperature represented by the temperature measuring signal;
- means (20) for receiving a power information representing the power delivered to the pan (2) and/or a state of control of the heater (4); and
- a power display (16) to display the power information;
**characterised by** comparison means (19) for generating a boiling signal when the temperature represented by the temperature measuring signal is greater than or equal to a boiling temperature of the liquid (3) in the pan (2), and a control unit (8) for controlling the power display (16) so that the power display (16) displays the power information only in the presence of the boiling signal, wherein the control unit (8) comprises the comparison means (19).

2. A display unit (18) according to claim 1, **characterised in that** the power display (16) comprises a plurality of segments (24 - 29) each electrically switchable separately between at least two display states.

3. A display unit (18) according to claim 2, **characterised in that** the plurality of segments (24 - 29) are electrically switchable into an on-state visible to an observer and a visible off-state.

4. A display unit (18) according to claim 2 or 3, **characterised in that** the power display (16) is adapted to represent a regulated state of control of the heater (4) by switching one (24) of the plurality of segments (24 - 29) into an on-state and alternatively to represent the power delivered by the heater (4) by switching into the on-state two (24, 25) or more of the plurality of segments (24 - 29) in proportion to the power delivered by the heater (4) to the pan (2).

5. A display unit (18) according to any one of the preceding claims, **characterised in that** the power display (16), particularly the plurality of segments, is electrically switchable, in the absence of the boiling signal, into a display state which is substantially not visible to the observer.

6. A display unit (18) according to any one of the preceding claims, **characterised in that** the temperature display (15) is a digital display.

7. A display unit (18) according to any one of the preceding claims, **characterised in that** the temperature display (15) and the power display (16) are combined in one display element (10).

8. A display unit (18) according to claim 7, **characterised in that** the display element (10) is a liquid crystal display.

9. A display unit (18) according to any one of the preceding claims, **characterised by** another display (17) to display the state of control of the heater (4).

10. A display unit (18) according to any one of the preceding claims, **characterised by** a regulator unit (21) comprised by the control unit (8) and coupled to the means (20) for receiving the power information, said regulator unit being adapted to regulate the power delivered by the heater (4) by switching between a state in which the heater (4) is switched on and a state in which it is switched off.

11. A display unit (18) according to any one of the preceding claims, **characterised by** a power detection unit (22) comprised by the control unit (8) and coupled to means (20) for receiving the power information, said power detection unit (22) being adapted to detect the power delivered at the pan (2) by means of a time integration unit (23) with reference to a ratio of a time of the switched-on state of the heater (4) to another time of the switched-off state of the heater (4) within a predetermined interval of time.

12. A display unit (18) according to claim 10 or 11, **characterised by** inputting means (12) to detect a preset value, wherein the regulator unit (21) is devised to determine the state of control of the heater (4) by reference to the preset value and the temperature represented by the temperature measuring signal.

13. A method of displaying a temperature and power information for a cooking appliance (1) with a pan (2) adapted to be heated by a heater (4), for cooking a food, with the following steps:
- reception of a temperature measuring signal representing the temperature of liquid (3) in the pan (2);
- displaying, by means of a temperature display (15), the temperature represented by the temperature measuring signal; and
- reception of a power information representing the power delivered to the pan (2) and/or a state of control of the heater (4);
**characterised by** the following steps:
- comparison of the temperature represented by the temperature signal with a boiling temperature of the liquid (3) by comparison means (19) and generation of a boiling signal when the temperature represented by the temperature measuring signal is greater than or equal to the boiling temperature of the liquid (3) in the pan (2), and
- controlling the power display (16) by means of a control unit (8) so that the power display (16) displays the power information only in the presence of the boiling signal.

14. A method according to claim 13, **characterised in that** the power display (16) is electrically switched into a state substantially not visible to an observer when the boiling signal is not present.

15. A method according to claim 13 or 14, **characterised in that** a segment (24) of a plurality of segments (24 - 29) of the power display (16) is switched to an on-state and the others of the plurality of segments (24 - 29) are switched to an off-state when the boiling signal is present and the power information represents the regulated state of control of the heater (4).

16. A method according to any one of claims 13 to 15, **characterised in that** two (24, 25) or more of the plurality of segments (24 - 29) are switched into an on-state proportionally to the power delivered by the heater (4) to the pan (2) when the boiling signal is present and the power information represents the power of the heater (4) delivered to the pan (2).

17. A method according to any one of claims 13 to 16, **characterised in that** the heater (4) is regulated by means of a regulator unit (21) by switching the heater (4) between a switched-on and a switched-off state.

18. A method according to any one of claims 13 to 17, **characterised by** detection of the power delivered by the heater (4) by means of time integration to determine a ratio of a time of the switched-on state of the heater (4) to another time of the switched-off state of the heater (4) within a predetermined interval of time.

19. A method according to claim 17 or 18, **characterised in that** by inputting means a preset value is converted to an electronic signal with reference to which the regulator unit (21) determines the state of control of the heater (4) in dependence on the temperature represented by the temperature measuring signal.

## Revendications

1. Unité d'affichage (18) pour un appareil de cuisson (1), pour la cuisson d'un aliment, avec un récipient (2) qui peut être chauffé à l'aide d'un chauffage (4) comprenant :
- une entrée de signal de mesure de température (7) pour recevoir un signal de mesure de température qui représente la température d'un liquide (3) présent dans le récipient ;
- un affichage de température (15) qui affiche la température représentée par le signal de mesure de température ;
- un moyen (20) de réception d'une information de puissance qui représente la puissance qui est transmise au récipient et/ou un état de régulation du chauffage (4) ;
et
- un affichage de puissance (16) pour l'affichage de l'information de puissance ;
**caractérisée par** des moyens de comparaison (19) servant à générer un signal d'ébullition lorsque la température représentée par le signal de mesure de température est supérieure ou égale à la température d'ébullition du liquide (3) présent dans le récipient (2) et par un système de régulation (8) comprenant les moyens de comparaison (19) servant à réguler l'affichage de puissance (16) de manière que l'affichage de puissance (16) n'affiche l'information de puissance qu'en cas de présence du signal d'ébullition.

2. Unité d'affichage (18) selon la revendication 1, **caractérisée en ce que** l'affichage de puissance (16) comprend des segments multiples (24 à 29), chacun de ces segments (24 à 29) pouvant, indépendamment, être commuté électriquement sur au moins deux états d'affichage.

3. Unité d'affichage (18) selon la revendication 2, **caractérisée en ce que** ces segments multiples (24 à 29) peuvent être commutés électriquement à un état actif visible par un observateur et à un état inactif visible par un observateur.

4. Unité d'affichage (18) selon la revendication 2 ou 3, **caractérisée en ce que** l'affichage de puissance (16) est conçu pour présenter un état de régulation stable du chauffage (4) par la commutation à l'état actif de l'un (24) des segments multiples (24 à 29) et alternativement pour présenter la puissance cédée par le chauffage (4) par la commutation à l'état actif de deux (24,25) ou plus des segments multiples (24 à 29) proportionnellement à la puissance cédée par le chauffage (4) au récipient (2).

5. Unité d'affichage (18) selon l'une des revendications précédentes, **caractérisée en ce qu'**en cas d'absence d'un signal d'ébullition, l'affichage de puissance (16), en particulier les segments multiples, peut être commuté électriquement sur un état d'affichage qui est essentiellement non visible.

6. Unité d'affichage (18) selon l'une des revendications précédentes, **caractérisée en ce que** l'affichage de température (15) est un affichage numérique.

7. Unité d'affichage (18) selon l'une des revendications précédentes, **caractérisée en ce que** l'affichage de température (15) et l'affichage de puissance (16) sont réunis en un élément d'affichage (10).

8. Unité d'affichage (18) selon la revendication 7, **caractérisée en ce que** l'élément d'affichage (10) est un affichage à cristaux liquides.

9. Unité d'affichage (18) selon l'une des revendications précédentes, **caractérisée par** un affichage supplémentaire (17) pour l'affichage de l'état de régulation du chauffage (4).

10. Unité d'affichage (18) selon l'une des revendications précédentes, **caractérisée en ce que** le système de régulation (8) comprend une unité de régulation (21) qui est reliée à des moyens (20) de réception de l'information de puissance servant à la régulation de la puissance cédée par le chauffage (4) par la commutation entre l'état actif et l'état inactif du chauffage (4).

11. Unité d'affichage (18) selon l'une des revendications précédentes, **caractérisée en ce que** le système de régulation (8) comprend une unité de détermination de puissance (22) qui est reliée à des moyens (20) de réception de l'information de puissance servant à déterminer la puissance cédée au récipient (2) à l'aide d'une unité d'intégration temporelle (23) sur la base du rapport de la durée de l'état actif du chauffage (4) à la durée de l'état inactif du chauffage pendant une durée prédéfinie.

12. Unité d'affichage (18) selon la revendication 10 ou 11, **caractérisée par** des moyens d'entrée de consigne (12) pour l'entrée d'une valeur de consigne, l'unité de régulation (21) étant conçue pour déterminer l'état de régulation du chauffage (4) sur la base de la valeur de consigne et de la température représentée par le signal de mesure de température.

13. Procédé d'affichage d'une température et d'une information de puissance pour un appareil de cuisson (1) avec un récipient (2), chauffé à l'aide un chauffage (4), pour la cuisson d'un aliment selon les étapes suivantes :
- réception d'un signal de mesure de température, représentant la température d'un liquide (3) dans le récipient (2).
- affichage de la température représentée par le signal de mesure de température à l'aide d'un affichage de température (15) ; et
- réception d'une information de puissance représentant la puissance cédée au récipient (2) et/ou l'état de régulation du chauffage (4) ;
**caractérisé par** les étapes suivantes :
- comparaison de la température représentée par le signal de température et d'une température d'ébullition du liquide (3) à l'aide de moyens de comparaison (19) et génération d'un signal d'ébullition lorsque la température représentée par le signal de température est supérieure ou égale à la température d'ébullition du liquide (3) présent dans le récipient (2), et
- commande de l'affichage de puissance (16) à l'aide d'une unité de commande (8) de sorte que l'affichage de puissance (16) n'affiche l'information de puissance qu'en cas de présence du signal d'ébullition.

14. Procédé selon la revendication 13, **caractérisé en ce qu'**en cas d'absence d'un signal d'ébullition, l'affichage de puissance (16) est commuté électriquement sur un état essentiellement non visible.

15. Procédé selon la revendication 13 ou 14, **caractérisé en ce qu'**un segment (24) des segments multiples (24 à 29) de l'unité d'affichage (16) est commuté à l'état actif et les autres des segments multiples (24 à 29) sont commutés à l'état inactif lorsque le signal d'ébullition est présent et **en ce que** l'information de puissance représente l'état de régulation stable du chauffage (4)

16. Procédé selon l'une des revendications 13 à 15, **caractérisé en ce que** deux (24,25) ou plus des segments multiples (24 à 29) sont commutés à l'état actif proportionnellement à la puissance cédée par le chauffage (4) au récipient (2) lorsque le signal d'ébullition est présent et **en ce que** l'information de puissance représente la puissance cédée au récipient (2) par le chauffage (4), qu'en cas de présence du signal d'ébullition.

17. Procédé selon l'une des revendications 13 à 16, **caractérisée en ce que** le chauffage (4) est régulé à l'aide d'une unité de régulation (21), le chauffage (4) étant basculé entre un état actif et un état inactif.

18. Procédé selon l'une des revendications 13 à 17, **caractérisé par** la détermination de la puissance cédée par le chauffage (4), à l'aide d'une intégration temporelle pour déterminer un rapport de la durée de l'état actif du chauffage (4) à la durée de l'état inactif du chauffage (4) à l'intérieur d'une période prédéfinie.

19. Procédé selon l'une des revendications 17 ou 18, **caractérisé en ce que**, à l'aide de moyens d'entrée de consigne, une valeur de consigne est transformée en un signal électronique sur la base duquel l'unité de régulation (21) détermine l'état de régulation du chauffage (4) en fonction de la température représentée par le signal de mesure de température.
